# EUROPEAN PATENT APPLICATION

(11) **EP 4 650 411 A1**
(43) Date of publication of application: **19.11.2025**
(21) Application number: 24175837.4
(22) Date of filing: 14.05.2024
(51) Int. Cl.: C09J 133/06

(54) **PRESSURE-SENSITIVE ADHESIVE COMPOSITION**

(71) Applicant: TESA SE, 22848 Norderstedt (DE)
(72) Inventor: BEFUß, Julia, 22848 Norderstedt (DE); MOEHRKE, Claudia, 22848 Norderstedt (DE); ZHONG, Fan, 22848 Norderstedt (DE); BOTHA, Carlo, 22848 Norderstedt (DE)
(74) Representative: tesa SE

(57) **Abstract**

The intention was to provide a pressure-sensitive adhesive composition being very suitable for bonding to clearcoats, offering a bond strength that meets requirements and exhibits outstanding shear strength even at high temperatures.

In use of the adhesive on clearcoats there should be no necessity for prior cleaning of the coating surface utilizing solvent, but nevertheless the adhesive should exhibit a good technical bonding performance profile on the clearcoat.

This is accomplished with a pressure-sensitive adhesive composition comprising
- (H1) a blend of one or more poly(meth)acrylate(s) and one or more polydiene block copolymer(s); and
- (H2) a tackifier resin component comprising at least one polyterpene resin;
characterized in that the pressure-sensitive adhesive composition comprises the one or more poly(meth)acrylate(s) in a total amount of more than 45 wt% and less than 60 wt%, based on the total weight of the pressure-sensitive adhesive composition.

## Description

The present invention relates to the technical field of pressure-sensitive adhesives and adhesive tapes of the kind widely used for producing temporary or else permanent bonds in a wide variety of different areas of the art. The invention more specifically proposes a pressure-sensitive adhesive composition based on a blend of poly(meth)acrylate and polydiene block copolymer, further comprising a polyterpene resin which is characterized by a specific amount of the poly(meth) acrylate. The pressure-sensitive adhesive composition is to be useful for bonding to surface coating materials.

Pressure-sensitive adhesives and adhesive tapes are used in general to assemble two substrates to form a temporary or permanent connection. Specific adhesive tape products have a foam layer and are used for example in the automotive industry for the permanent bonding of components of the bodywork or in the engine area. Typical examples of this are the bonding of insignia and the securing of plastics parts and rubber door seals. The bodywork is typically provided with a surface coating, more particularly with a clearcoat, on which the bonding is to take place.

Examples of self-adhesive tapes for the bonding of components to automotive coatings are disclosed in WO 2008/070386 A1 and in US 4,415,615 A.

In spite of a multiplicity of adhesives and adhesive tapes, there is a need to develop new pressure-sensitive adhesives, formulations and adhesive tape designs because of innovative coating materials, the fundamentally high diversity, for example, of different kinds of clearcoats, and also rising requirements in the end-use application. The clearcoat materials typical in the automotive sector include so-called 1K and 2K clearcoats, which may be solvent-, water- or powder-based (H. Kittel, Lehrbuch der Lacke und Beschichtungen, volume 6, H. J. Streitberger (ed.), 2nd edn., 2008, S. Hirzel, Stuttgart, pp. 437-441). Frequently utilized are so-called 2K PU coatings. Even known clearcoats in some cases still pose challenges for high-performance pressure-sensitive adhesives, for reasons including the continual rise in the requirements, as in relation, for example, to the shear strength of a bonded assembly at elevated temperatures. Moreover, many clearcoats contain surface-active additives, which hinder bonding such coatings. Prior to application of an adhesive tape on a clearcoat it is conventional for the clearcoat surface to have to be precleaned. This precleaning is depicted very illustratively by Horgnies et al. (J. Adhes. Sci. Techn., 2004, 18(9), 1047-1061) and is accomplished typically with utilization of solvent, such as in this case ethanol.

Accordingly there is a requirement for a pressure-sensitive adhesive composition on the one hand to exhibit improved adhesion even to challenging clearcoats and on the other hand to preserve an outstanding performance profile even under extreme climatic conditions.

In addition, a pressure-sensitive adhesive composition and an adhesive tape equipped therewith must also be compatible with the production and processing operations in, for example, the automotive industry. Because of increasing automation of production operations and because of the desire for more economic modes of manufacturing, the adhesive tape, as soon as it is placed at the correct position, must have sufficiently high adhesion and in some cases must also withstand high shearing forces. It is advantageous for this purpose if the adhesive tapes exhibit high tack and the adhesives flow rapidly onto various substrates, so that effective wetting and therefore high peel adhesion are achieved within a very short time. There is a preference overall for adhesive tapes which can be applied without prior pretreatment of the target surface and without the need to accept substantial reductions in performance.

Various adhesives and adhesive tapes have been described for bonding to automotive coatings.

EP 0 349 216 A1 and EP 0 352 901 A1 describe two-phase blends consisting of a polyacrylate and a synthetic rubber, preferably a styrene block copolymer, which are praised particularly for their bonding to paints and varnishes.

EP 2 226 369 A1 describes an adhesive tape which has a viscoelastic acrylate foam carrier, lined with at least one layer of pressure-sensitive adhesive. The pressure-sensitive adhesive contains a chemically crosslinked rubber, preferably a synthetic rubber crosslinked via electron beam curing. The adhesive tapes described exhibit not only good peel adhesion on various paint and varnish films but also sufficient cohesion at high temperatures. Rubbers which can be used are said generally to be polyvinylaromatic-polydiene block copolymers and hydrogenated derivatives. The pressure-sensitive adhesive may also contain tackifier resins, of which various types are stated.

DE 10 2012 212 883 A1 discloses adhesive tapes having a viscoelastic acrylate foam carrier and, applied thereon, at least one adhesive layer based on a mixture of synthetic rubbers. Emphasis is given to polyvinylaromatic-polydiene block copolymers and hydrogenated derivatives. Explicitly described, as well as formulations with polystyrene-polyisoprene block copolymers, are those based on polystyrene-polybutadiene block copolymers. The formulation for the adhesive layer contains at least one tackifier resin which is not compatible with polyacrylate.

Further examples of self-adhesive tapes with a foam carrier and a synthetic rubber-based pressure-sensitive adhesive located thereon are described in EP 1 417 255 A1 and in WO 2008/073669 A1. Both specifications generally disclose different tackifier resins for the combination with polyvinylaromatic-polydiene block copolymers. EP 3 243 886 A1 and EP 3 336 153 A1 as well list different types of tackifier resin.

EP 2 848 665 A1 describes adhesive tapes which comprise a layer of pressure-sensitive adhesive and a viscoelastic carrier layer. The pressure-sensitive adhesive layer is based on a block copolymer of a monovinyl-substituted aromatic compound and a conjugated diene, with the base polymer having a diblock fraction of 30 wt% or more. The viscoelastic layer has a thickness of 20 µm or more.

WO 2015/195616 A1 discloses an adhesive tape having a pressure-sensitive adhesive which comprises at least one natural rubber elastomer and/or synthetic rubber elastomer and a polar, phenolic tackifier resin. Reversible adhesives are described which are said after a relatively short service period to be redetachable from the substrate, with precleaning of the bond substrate being considered therefore not to be necessary.

DE 10 2019 216 938 A1 discloses a foamed pressure-sensitive adhesive layer containing
a) 41.7 wt% to 62.0 wt% of an elastomer component,
b) 37.7 wt% to 58.0 wt% of a tackifier resin component,
c) 0 wt% to 15 wt% of a plasticizer resin component,
d) 0 wt% to 18 wt% of further additives, and
e) microballoons with a fraction of preferably 0.3 wt% to 2.5 wt%,

the microballoons being at least partly expanded,
the elastomer component (a) consisting to an extent of at least 90 wt% of polyvinylaromatic-polydiene block copolymer,
the tackifier resin component (b) containing, to an extent of 4 wt% to 100 wt%, at least one kind of a rosin oligomer having a softening temperature (ring & ball) of at least 90°C, and
the density of the foamed pressure-sensitive adhesive layer being at least 600 kg/m³ and at most 920 kg/m³.

Blends of poly(meth)acrylate and polyvinylaromatic-polydiene block copolymers as a basis for pressure-sensitive adhesives which are used with a foamed carrier as adhesive tape are known from EP 3 228 674 A1. The pressure-sensitive adhesives contain a peel adhesion-boosting resin to an extent of at least 10 wt%.

The aforementioned EP 3 336 153 A1, moreover, performs a typical process in the application of adhesive tapes to clearcoats, in which the clearcoat prior to the application of the adhesive tape is cleaned with solvent and wiped dry. This process is costly and inconvenient in a real-life application and reduces the efficiency of the production processes.

EP 4 253 493 A1 discloses an adhesive tape that can be used on clearcoat materials with no need for a prior cleaning of the coating surface utilizing solvents, the tape comprising
- a carrier layer (T), and
- a layer (H) of pressure-sensitive adhesive, arranged on the outside in the structure of the adhesive tape and comprising:
   ∘ (H1) at least one polymer selected from poly(meth)acrylates and polydiene block copolymers, or at least one blend of at least one poly(meth)acrylate and at least one polydiene block copolymer; and
   ∘ (H2) a tackifier resin component comprising at least one terpene phenolic resin;
and which is characterized in that the terpene phenolic resin has a softening temperature as determined by the ring-and-ball method according to ASTM E28, of not more than 140 °C.

A general object of the invention, against the background outlined, was to provide a pressure-sensitive adhesive composition very suitable for bonding to clearcoats and offering a bond strength that meets requirements.

A further object of the invention was to design the pressure-sensitive adhesive composition such that it exhibits, furthermore, outstanding shear strength even at high temperatures.

It was a further object of the invention to provide a pressure-sensitive adhesive composition which when used on clearcoats does not necessitate a prior cleaning of the coating surface utilizing solvent, but which nevertheless exhibits a good technical bonding performance profile on the clearcoat, especially in the sense of the properties stated above.

The achievement of the object is based on the concept of utilizing a pressure-sensitive adhesive composition based on a poly(meth)acrylate / polydiene block copolymer blend, further comprising a specific tackifying resin and having a specific fraction of poly(meth)acrylate. A first and general subject of the invention is a pressure-sensitive adhesive composition comprising
- (H1) a blend of one or more poly(meth)acrylate(s) and one or more polydiene block copolymer(s); and
- (H2) a tackifier resin component comprising at least one polyterpene resin;
characterized in that the pressure-sensitive adhesive composition comprises the one or more poly(meth)acrylate(s) in a total amount of more than 45 wt% and less than 60 wt%, based on the total weight of the pressure-sensitive adhesive composition.

As has emerged, the objects of the invention can be achieved with such a pressure-sensitive adhesive composition. More particularly it has proved to be the case that with a pressure-sensitive adhesive composition of the invention it was possible to produce satisfactory bonds even on soiled clearcoat materials without any need for prior cleaning of the coating surface with solvent. Instead it emerged to be sufficient simply to wipe down the coating surface with a dry cloth. The surface can therefore be prepared for bonding in a much simpler way and in a way which is sparing in its use of materials.

A pressure-sensitive adhesive (PSA) is understood, in line with the general understanding, to be an adhesive which permits a durable bond to virtually all substrates even under relatively weak applied pressure and which where appropriate after use can be detached again substantially without residue from the substrate. A PSA is permanently adhesive at room temperature, thus having a sufficiently low viscosity and a high touch tack, so that it wets the surface of the respective bond base even at low applied pressure. The bondability of the adhesive derives from its adhesive properties, and the redetachability from its cohesive properties.

The pressure-sensitive adhesive (PSA) composition may have two or more phases. In one embodiment at least one phase has a glass transition temperature (according to Test VII) of not more than 20°C, preferably of not more than -20°C. With particular preference this phase forms the majority phase, meaning that its volume fraction is greater than the sum of the volume fractions of all phases having a softening temperature above 25°C. This phase preferably forms a continuous phase within the PSA composition.

### Component (H1) - poly(meth)acrylate / polydiene block copolymer blend

The PSA composition in accordance with the invention comprises a blend of one or more poly(meth)acrylate(s) and one or more polydiene block copolymer(s). Such blend is present in the pressure-sensitive adhesive composition preferably in an amount of more than 65 wt%, more preferably of more than 67 wt% and very preferably of more than 70 wt% and so preferably forms the matrix or scaffold of the PSA composition, which substantially determines its properties. The PSA composition preferably comprises to an extent of more than 65 wt% and less than 85 wt%, more preferably of more than 70 wt% and less than 80 wt%, based on the total weight of the PSA composition, a blend of one or more poly(meth)acrylate(s) and one or more polydiene block copolymer(s).

Where reference is made below, simplifyingly, to the plural, i.e., to poly(meth)acrylates or polydiene block copolymers of the blend of the PSA composition, this expression shall explicitly always include the case where the blend comprises only a single poly(meth)acrylate and/or only a single polydiene block copolymer.

The diene block copolymers of the blend (H1) are preferably polyvinylaromatic-polydiene block copolymers, where the polydiene may preferably originate from a conjugated diene, more particularly a 1,3-diene. The mean diblock fraction of the polyvinylaromatic-polydiene block copolymers, based on the entirety of all the polyvinylaromatic-polydiene block copolymers of the blend (H1), is preferably greater than 50 wt%. The polydiene blocks of the polyvinylaromatic-polydiene block copolymers preferably have a mean vinyl fraction (Test VIII) of less than 20 wt%, more preferably of less than 17 wt%, more particularly of less than 13 wt%, based in each case on the entirety of all the polydiene blocks of the blend (H1). Preferably, the polyvinylaromatic-polydiene block copolymers of the blend (H1) have a peak molar mass (Test la) of at least 125 000 g/mol, more preferably of at least 200 000 g/mol, more particularly of at least 250 000 g/mol.

The polydiene block copolymers are present preferably in a structure of the form A-B, A-B-A, (A-B)ₙ , (A-B)ₙX or (A-B-A)ₙX, in which
- the blocks A independently of one another are a polymer formed by polymerization of at least one vinylaromatic;
- the blocks B independently of one another are a polymer formed by polymerization of one or more conjugated dienes having 4 to 18 C atoms;
- X is the radical of a coupling reagent or polyfunctional initiator; and
- n is an integer ≥ 2.

The polydiene block copolymers thus preferably each comprise one or more rubberlike blocks B (elastomer blocks, soft blocks) and one or more glasslike blocks A (hard blocks).

It is possible for all the polydiene block copolymers of the PSA composition, if two or more are present, to correspond to a structure A-B, A-B-A, (AB)₂X, (A-B)₃X or (A-B)₄X where A, B and X are subject to the definitions above. Preferably, the polydiene block copolymers comprise at least one diblock copolymer and at least one triblock copolymer. Preferably, the polydiene block copolymers comprise at least one triblock copolymer or higher multiblock copolymer (linear or multi-armed, radial, star-shaped), more preferably at least one triblock copolymer, which has a weight-average molar mass of at least 125 000 g/mol, more preferably of at least 140.000 g/mol. Likewise preferably, the polydiene block copolymers comprise at least one diblock copolymer which has a weight-average molar mass of at least 50 000 g/mol, more preferably of at least 65.000 g/mol.

The PSA composition or the blend (H1), respectively, preferably comprises one or more triblock polydiene copolymers A-B-A and one or more diblock polydiene copolymers A-B. With particular preference the mean diblock fraction of the polydiene block copolymers, based on the entirety of all the polydiene block copolymers of the pressure-sensitive adhesive composition, is more than 50 wt%, more particularly more than 60 wt% and especially preferably more than 70 wt%.

In particular, the PSA composition of the invention comprises a mixture of polydiene block copolymers having a structure A-B and A-B-A. More preferably, all polydiene block copolymers of the PSA composition have a structure A-B or A-B-A.

The block copolymers resulting from the A and B blocks may in principle contain identical or different B blocks.

Preferably, the blocks A in the structures set forth hereinbefore are vinylaromatic blocks. Vinylaromatics for the construction of the block A comprise preferably styrene and styrene derivatives, more preferably styrene and α-methylstyrene. The block A may therefore take the form of a homopolymer or copolymer. With particular preference the block A is a polystyrene block. Instead of the preferred polystyrene blocks, however, it is also possible as vinylaromatics to utilize polymer blocks based on other aromatic-containing homopolymers and copolymers, preferably those of C8 to C12 aromatics, having glass transition temperatures of greater than 75°C, for example α-methylstyrene-containing aromatic blocks. The polydiene block copolymers may comprise identical or different A blocks.

The polydiene triblock copolymers preferably have polystyrene end blocks.

The monomers for the soft block B are preferably conjugated dienes, more particularly those selected from the group consisting of butadiene, isoprene, ethylbutadiene, phenylbutadiene, piperylene, pentadiene, hexadiene, ethylhexadiene, farnesene and dimethylbutadiene, and any desired mixtures of these monomers. The block B as well may take the form of a homopolymer or a copolymer.

With particular preference the monomers for the soft block B are selected from butadiene and isoprene. For example, the soft block B is a polyisoprene block or a polybutadiene block or a polymer block composed of a mixture of butadiene and isoprene. With very particular preference the block B is a polybutadiene.

A blocks are also referred to in the context of the present invention as "hard blocks". B blocks accordingly are also called "soft blocks", or "elastomer blocks". This reflects the selection of blocks in accordance with their glass transition temperatures, which for the A blocks are preferably at least 25°C, more particularly at least 50°C, and for the B blocks are preferably not more than 0°C, more particularly not more than -25°C. These figures are based on the pure, unblended block copolymers and are ascertained in accordance with the invention via DSC (Test VII).

The fraction of hard block in the polyvinylaromatic-polydiene block copolymers is preferably at least 12 wt% and not more than 40 wt%, more preferably at least 15 wt% and not more than 35 wt%, and more particularly at least 20 wt%.

Preferably, the PSA composition comprises one or more polydiene block copolymers in a total amount of more than 20 wt%, more preferably of more than 22 wt% and most preferably of more than 24 wt%. Likewise, preferably, the PSA composition comprises one or more polydiene block copolymers in a total amount of less than 30 wt%, more preferably of less than 28 wt%.

Preferably, the fraction of the entirety of all the polydiene block copolymers, based on the overall PSA composition, is preferably more than 20 wt% and less than 30 wt%; more preferably more than 22 wt% and less than 28 wt%. It has been found that too small a fraction of polydiene block copolymers causes the thermal shear strength of the PSA composition to drop. Too high a fraction of polyvinylaromatic-polydiene block copolymers in turn causes the PSA composition to lose adhesiveness.

The block copolymers resulting from the A and B blocks may contain identical or different B blocks, including in relation to the microstructure. By "microstructure" is meant the relative proportion of the possible types of monomer linkage for polybutadiene, polyisoprene or another conjugated diene, especially 1,3-diene, these possible types of monomer linkage being 1,4-cis (in polybutadiene and polyisoprene), 1,4-trans (in polybutadiene and polyisoprene), 1,2 (in polybutadiene and polyisoprene) and 3,4 (in polyisoprene). With preference the 1,4 fraction (cis + trans) is > 80 wt%, more preferably > 85 wt%, based in each case on the polydiene blocks, and the 1,4-cis fraction is > 40 wt%, based on the polydiene blocks; correspondingly, the fraction of 1,2-linked and/or any 3,4-linked monomers present in total, i.e. the so-called vinyl fraction, determined according to Test VIII, is preferably less than 20 wt%, more preferably not more than 17 wt%, more particularly at most 13 wt%. A high fraction of 1,4 linkage and more particularly 1,4-cis linkage of the monomer units in the polydiene blocks, or a low fraction of vinyl groups, leads to a lower glass transition temperature, allowing good shock resistance to be achieved even in a cold environment. For this reason as well, polybutadiene is a preferred monomer for the B block or the B blocks. In an alternative embodiment, the quantitative figures for the types of monomer linkage, such as in particular for the vinyl fraction, relate not to wt% but instead to mol%.

Commercially available block copolymer products frequently have a combination of polymers with different architecture. Thus, for example, Kraton^{®} D1101, nominally a linear polystyrene-polybutadiene triblock copolymer, contains according to manufacturer indication (The Global Connection for Polymer and Compound Solution - Product and Application Guide, Kraton Performance Polymers, 2011) a diblock copolymer at 16 wt%. Kraton^{®} D1118, conversely, another polystyrene-polybutadiene block copolymer, contains a diblock copolymer at 78 wt%. The figures above for the molar mass of the block copolymers are based in each case on the polymer mode which can be assigned by a skilled person to the block copolymer architecture stated in the corresponding context. Figures for the molar mass are to be understood in this context as peak molar mass. GPC (Test I) customarily allows the finding of the molar mass of the individual polymer modes in a mixture of different block copolymers.

The blend of the PSA composition according to the invention comprises one or more poly(meth)acrylate(s). Irrespective of whether, below, the expressions "the poly(meth)acrylate" or "the poly(meth)acrylates" are used, the reference is always to one single or two or more poly(meth)acrylates as a constituent of the PSA composition.

A "poly(meth)acrylate" is understood to mean a polymer obtainable by radical polymerization of acrylic and/or methacrylic monomers and optionally further, copolymerizable monomers. More particularly, a "poly(meth)acrylate" is understood to mean a polymer having a monomer basis consisting to an extent of at least 50 wt% of acrylic acid, methacrylic acid, acrylic esters and/or methacrylic esters, where acrylic esters and/or methacrylic esters are present at least in part, preferably to an extent of at least 30 wt%, based on the overall monomer basis of the polymer in question.

The glass transition temperature of the poly(meth)acrylates of the PSA composition is preferably < 0 °C, more preferably between -20 and -50 °C. The glass transition temperature of polymers or of polymer blocks in block copolymers is determined in accordance with the invention by means of dynamic scanning calorimetry (DSC).

The poly(meth)acrylates preferably comprise at least one proportionally copolymerized functional monomer which is more preferably reactive with epoxy groups to form a covalent bond. Most preferably, the proportionally copolymerized functional monomer which is more preferably reactive with epoxy groups to form a covalent bond contains at least one functional group selected from the group consisting of carboxylic acid groups, sulfonic acid groups, phosphonic acid groups, hydroxy groups, acid anhydride groups, epoxy groups and amino groups; it especially contains at least one carboxylic acid group. Extremely preferably, the poly(meth)acrylate contains proportionally copolymerized acrylic acid and/or methacrylic acid. In particular, the poly(meth)acrylate contains proportionally copolymerized acrylic acid in an amount of at least 8 wt%, more preferably of at least 10 wt%, most preferably of at least 11 wt%, based on the entirety of all monomers forming the poly(meth)acrylate. All the groups mentioned have reactivity with epoxy groups, which means that the poly(meth)acrylate is advantageously amenable to thermal crosslinking with introduced epoxides.

The poly(meth)acrylates of the PSA composition may preferably be based on the following monomer composition:
a) at least one acrylic ester and/or methacrylic ester of the following formula (1)

   CH₂=C(R^{I})(COOR^{II}) (1)

   in which R^{I} = H or CH₃ and R" is an alkyl radical having 4 to 18 C atoms;
b) at least one olefinically unsaturated monomer having at least one functional group selected from the group consisting of carboxylic acid groups, sulfonic acid groups, phosphonic acid groups, hydroxy groups, acid anhydride groups, epoxy groups and amino groups;
c) optionally further acrylic esters and/or methacrylic esters and/or olefinically unsaturated monomers copolymerizable with component (a).

Preferably, monomers of component a) are present with a proportion of 45 to 99 wt%, monomers of component b) with a proportion of 1 to 15 wt% and monomers of component c) with a proportion of 0 to 40 wt%, where the figures are based on the monomer mixture for the base polymer without additions of any additives such as resins etc.

The monomers of component a) are generally plasticizing, comparatively nonpolar monomers. More preferably, R" in the monomers a) is a branched or unbranched alkyl radical having 4 to 10 C atoms or 2-propylheptyl acrylate or 2-propylheptyl methacrylate. The monomers of the formula (1) are especially selected from the group consisting of n-butyl acrylate, n-butyl methacrylate, n-pentyl acrylate, n-pentyl methacrylate, n-amyl acrylate, n-hexyl acrylate, n-hexyl methacrylate, n-heptyl acrylate, n-octyl acrylate, n-octyl methacrylate, n-nonyl acrylate, isobutyl acrylate, isooctyl acrylate, isooctyl methacrylate, 2-ethylhexyl acrylate, 2-ethylhexyl methacrylate, 2-propylheptyl acrylate and 2-propylheptyl methacrylate.

The monomers of component b) are more preferably selected from the group consisting of acrylic acid, methacrylic acid, itaconic acid, maleic acid, fumaric acid, crotonic acid, aconitic acid, dimethylacrylic acid, β-acryloyloxypropionic acid, trichloroacrylic acid, vinylacetic acid, vinylphosphonic acid, maleic anhydride, hydroxyethyl acrylate, especially 2-hydroxyethyl acrylate, hydroxypropyl acrylate, especially 3-hydroxypropyl acrylate, hydroxybutyl acrylate, especially 4-hydroxybutyl acrylate, hydroxyhexyl acrylate, especially 6-hydroxyhexyl acrylate, hydroxyethyl methacrylate, especially 2-hydroxyethyl methacrylate, hydroxypropyl methacrylate, especially 3-hydroxypropyl methacrylate, hydroxybutyl methacrylate, especially 4-hydroxybutyl methacrylate, hydroxyhexyl methacrylate, especially 6-hydroxyhexyl methacrylate, allyl alcohol, glycidyl acrylate, glycidyl methacrylate.

Illustrative monomers of component c) are:
methyl acrylate, ethyl acrylate, n-propyl acrylate, methyl methacrylate, ethyl methacrylate, benzyl acrylate, benzyl methacrylate, sec-butyl acrylate, tert-butyl acrylate, phenyl acrylate, phenyl methacrylate, isobornyl acrylate, isobornyl methacrylate, tert-butylphenyl acrylate, tert-butylphenyl methacrylate, dodecyl methacrylate, isodecyl acrylate, lauryl acrylate, n-undecyl acrylate, stearyl acrylate, tridecyl acrylate, behenyl acrylate, cyclohexyl methacrylate, cyclopentyl methacrylate, phenoxyethyl acrylate, phenoxyethyl methacrylate, 2-butoxyethyl methacrylate, 2-butoxyethyl acrylate, 3,3,5-trimethylcyclohexyl acrylate, 3,5-dimethyladamantyl acrylate, 4-cumylphenyl methacrylate, cyanoethyl acrylate, cyanoethyl methacrylate, 4-biphenylyl acrylate, 4-biphenylyl methacrylate, 2-naphthyl acrylate, 2-naphthyl methacrylate, tetrahydrofurfuryl acrylate, diethylaminoethyl acrylate, diethylaminoethyl methacrylate, dimethylaminoethyl acrylate, dimethylaminoethyl methacrylate, methyl 3-methoxyacrylate, 3-methoxybutyl acrylate, 2-phenoxyethyl methacrylate, butyldiglycol methacrylate, ethylene glycol acrylate, ethylene glycol monomethyl acrylate, methoxy polyethylene glycol methacrylate 350, methoxy polyethylene glycol methacrylate 500, propylene glycol monomethacrylate, butoxy diethylene glycol methacrylate, ethoxy triethylene glycol methacrylate, octafluoropentyl acrylate, octafluoropentyl methacrylate, 2,2,2-trifluoroethyl methacrylate, 1,1,1,3,3,3-hexafluoroisopropyl acrylate, 1,1,1,3,3,3-hexafluoroisopropyl methacrylate, 2,2,3,3,3-pentafluoropropyl methacrylate, 2,2,3,4,4,4-hexafluorobutyl methacrylate, 2,2,3,3,4,4,4-heptafluorobutyl acrylate, 2,2,3,3,4,4,4-heptafluorobutyl methacrylate, 2,2,3,3,4,4,5,5,6,6,7,7,8,8,8-pentadecafluorooctyl methacrylate, dimethylaminopropylacrylamide, dimethylaminopropylmethacrylamide, N-(1-methylundecyl)-acrylamide, N-(n-butoxymethyl)acrylamide, N-(butoxymethyl)methacrylamide, N-(ethoxymethyl)acrylamide, N-(n-octadecyl)acrylamide; N,N-dialkyl-substituted amides, for example N,N-dimethylacrylamide and N,N-dimethylmethacrylamide; N-benzylacrylamide, N-isopropylacrylamide, N-tert-butylacrylamide, N-tert-octylacrylamide, N-methylolacrylamide, N-methylolmethacrylamide, acrylonitrile, methacrylonitrile; vinyl ethers such as vinyl methyl ether, ethyl vinyl ether, vinyl isobutyl ether; vinyl esters such as vinyl acetate; vinyl halides, vinylidene halides, vinylpyridine, 4-vinylpyridine, N-vinylphthalimide, N-vinyllactam, N-vinylpyrrolidone, styrene, α- and p-methylstyrene, α-butylstyrene, 4-n-butylstyrene, 4-n-decylstyrene, 3,4-dimethoxystyrene; macromonomers such as 2-polystyreneethyl methacrylate (weight-average molecular weight Mw, determined by GPC, of 4000 to 13 000 g/mol), poly(methyl methacrylate)ethyl methacrylate (Mw of 2000 to 8000 g/mol).

Monomers of component c) may advantageously also be chosen such that they contain functional groups that assist subsequent radiochemical crosslinking (for example by electron beams, UV). Suitable copolymerizable photoinitiators are, for example, benzoin acrylate and acrylate-functionalized benzophenone derivatives. Monomers that assist crosslinking by electron bombardment are, for example, tetrahydrofurfuryl acrylate, N-tert-butylacrylamide and allyl acrylate.

The preparation of the poly(meth)acrylates is preferably accomplished by conventional radical polymerizations or controlled radical polymerizations. The poly(meth)acrylates can be prepared by copolymerization of the monomers using customary polymerization initiators and optionally chain transfer agents, by polymerization at the customary temperatures in bulk, in emulsion, for example in water or liquid hydrocarbons, or in solution.

The poly(meth)acrylates are preferably prepared by copolymerizing the monomers in solvents, more preferably in solvents having a boiling range of 50 to 150°C, especially of 60 to 120°C, using 0.01 to 5 wt%, especially 0.1 to 2 wt%, based in each case on the total weight of the monomers, of polymerization initiators.

All customary initiators are suitable in principle. Examples of radical sources are peroxides, hydroperoxides and azo compounds, for example dibenzoyl peroxide, cumene hydroperoxide, cyclohexanone peroxide, di-t-butyl peroxide, cyclohexylsulfonylacetyl peroxide, diisopropyl percarbonate, t-butyl peroctoate and benzopinacol. Preferred radical initiators are 2,2'-azobis(2-methylbutyronitrile) (Vazo^{®} 67^{™} from DuPont) or 2,2'-azobis(2-methylpropionitrile) (2,2'-azobisisobutyronitrile; AIBN; Vazo^{®} 64^{™} from DuPont).

Preferred solvents for the preparation of the poly(meth)acrylates are alcohols such as methanol, ethanol, n- and isopropanol, n- and isobutanol, especially isopropanol and/or isobutanol; hydrocarbons such as toluene and especially benzines with a boiling range from 60 to 120 °C; ketones, especially acetone, methyl ethyl ketone, methyl isobutyl ketone, esters such as ethyl acetate, and mixtures of the aforementioned solvents. Particularly preferred solvents are mixtures containing isopropanol in amounts of 2 to 15 wt%, especially of 3 to 10 wt%, based in each case on the solvent mixture used.

The weight-average molecular weights M_{w} of the poly(meth)acrylates are preferably within a range from 20 000 to 2 000 000 g/mol; very preferably within a range from 100 000 to 1 500 000 g/mol, exceptionally preferably within a range from 150 000 to 1 000 000 g/mol. For this purpose, it may be advantageous to conduct the polymerization in the presence of suitable chain transfer agents such as thiols, halogen compounds and/or alcohols in order to establish the desired average molecular weight.

The poly(meth)acrylates preferably have a K value of 30 to 90, more preferably of 40 to 70, measured in toluene (1% solution, 21°C). Fikentscher's K value is a measure of the molecular weight and viscosity of polymers.

The principle of the method is based on the determination of the relative solution viscosity by capillary viscometry. For this purpose, the test substance is dissolved in toluene by shaking for 30 minutes, so as to obtain a 1% solution. In a Vogel-Ossag viscometer, at 25°C, the flow time is measured and this is used to determine the relative viscosity of the sample solution with respect to the viscosity of the pure solvent. According to Fikentscher [P. E. Hinkamp, Polymer, 1967, 8, 381], it is possible to read off the K value from tables (K = 1000 k).

The poly(meth)acrylates of the PSA composition preferably have a polydispersity PD < 4 and hence a relatively narrow molecular weight distribution. Adhesives based thereon, in spite of a relatively low molecular weight, after crosslinking have particularly good shear strength. Moreover, the relatively low polydispersity enables easier processing from the melt since the flow viscosity is lower compared to a poly(meth)acrylate of broader distribution with largely the same application properties. Poly(meth)acrylates having a narrow distribution can advantageously be prepared by anionic polymerization or by controlled radical polymerization methods, the latter being of particularly good suitability. It is also possible to prepare corresponding poly(meth)acrylates via N-oxyls. In addition, it is advantageously possible to use atom transfer radical polymerization (ATRP) for synthesis of narrow-distribution poly(meth)acrylates, preferably using monofunctional or difunctional, secondary or tertiary halides as initiator, and complexes of Cu, Ni, Fe, Pd, Pt, Ru, Os, Rh, Co, Ir, Ag or Au for abstraction of the halides. RAFT polymerization is also suitable.

The poly(meth)acrylates of the PSA composition are preferably crosslinked by linkage reactions - especially in the form of addition or substitution reactions - of functional groups present therein with thermal crosslinkers. It is possible to use any thermal crosslinkers which
- both assure a sufficiently long processing time, such that there is no gelation during the processing operation, especially the extrusion operation,
- and also lead to rapid post-crosslinking of the polymer to the desired level of crosslinking at lower temperatures than the processing temperature, especially at room temperature. Preference is given to using thermal crosslinkers at 0.1 to 5 wt%, especially at 0.2 to 1 wt%, based on the total amount of the polymer to be crosslinked.

Crosslinking via coordinative crosslinkers as well is possible, also referred to as complexing agents or chelates. Coordinative crosslinkers include, in particular, polyvalent metal chelate compounds. The term "polyvalent metal chelate compound" refers to those compounds in which a polyvalent metal is bonded coordinatively to one or more organic compounds. As polyvalent metal atom it is possible to use AI(III), Zr(IV), Co(II), Cu(I), Cu(II), Fe(II), Fe(III), Ni(II), V(II), V(III), V(IV), V(V), Zn(II), In(III), Ca(II), Mg(II), Mn(II), Y(III), Ce(II), Ce(IV), St(II), Ba(II), Mo(II), Mo(IV), Mo(VI), La(III), Sn(ll) Sn(IV), Ti(IV) and the like. Of these, AI(III), Zr(IV) and Ti(IV) are preferred.

Ligands that may serve for the coordinative crosslinkers include in principle all known ligands. The atoms utilized for the coordinative bonding of the organic compound may, however, in particular be those atoms which have free electron pairs, such as, for example, oxygen atoms, sulfur atoms, nitrogen atoms and the like. As organic compound it is possible for example to utilize alkyl esters, alcohol compounds, carboxylic acid compounds, ether compounds, ketone compounds and the like. Mention may be made more particularly of titanium chelate compounds such as titanium dipropoxide bis(acetylacetonate), titanium dibutoxide bis(octylene glycholate), titanium dipropoxide bis(ethyl acetoacetate), titanium dipropoxide bis(lactate), titanium dipropoxide bis(triethanolaminate), titanium di-n-butoxide bis(triethanolaminate), titanium tri-n-butoxide monostearate, butyl titanate dimer, poly(titanium acetylacetonate) and the like; aluminium chelate compounds such as aluminium diisopropoxide monoethyl acetate, aluminium di-n-butoxide monomethyl acetoacetate, aluminium di-isobutoxide monomethyl acetoacetate, aluminium di-n-butoxide monoethyl acetoacetate, aluminium di-sec-butoxide monoethylacetoacetate, aluminium triacetylacetonate, aluminium triethyl acetoacetonate, aluminium monoacetylacetonate bis(ethyl acetoacetonate) and the like; and zirconium chelate compounds such as zirconium tetraacetylacetonate and the like, illustratively. Of these, preference is given to aluminium triacetylacetonate and aluminium dipropoxide. They may be used alone or in combination of two or more kinds thereof.

The poly(meth)acrylates are preferably crosslinked at least covalently by means of one or more epoxides or by means of one or more substances containing epoxy groups. The substances containing epoxy groups are more particularly polyfunctional epoxides, i.e., those with at least two epoxy groups; the overall result is accordingly indirect linkage of the units of the poly(meth)acrylates that bear the functional groups. The substances containing epoxy groups may be either aromatic or aliphatic compounds.

Outstandingly suitable polyfunctional epoxides are oligomers of epichlorohydrin, epoxy ethers of polyhydric alcohols, especially of ethylene glycol, propylene glycol and butylene glycol, polyglycols, thiodiglycols, glycerol, pentaerythritol, sorbitol, polyvinyl alcohol, polyallyl alcohol and the like; epoxy ethers of polyhydric phenols, especially of resorcinol, hydroquinone, bis(4-hydroxyphenyl)methane, bis(4-hydroxy-3-methylphenyl)methane, bis(4-hydroxy-3,5-dibromophenyl)methane, bis(4-hydroxy-3,5-difluorophenyl)methane, 1,1-bis(4-hydroxyphenyl)ethane, 2,2-bis(4-hydroxyphenyl)propane, 2,2-bis(4-hydroxy-3-methylphenyl)propane, 2,2-bis(4-hydroxy-3-chlorophenyl)propane, 2,2-bis(4-hydroxy-3,5-dichlorophenyl)propane, 2,2-bis(4-hydroxy-3,5-dichlorophenyl)propane, bis(4-hydroxyphenyl)phenylmethane, bis(4-hydroxyphenyl)phenylmethane, bis(4-hydroxyphenyl)diphenylmethane, bis(4-hydroxyphenyl)-4'-methylphenylmethane, 1,1-bis(4-hydroxyphenyl)-2,2,2-trichloroethane, bis(4-hydroxyphenyl)-(4-chlorophenyl)methane, 1,1-bis(4-hydroxyphenyl)cyclohexane, bis(4-hydroxyphenyl)cyclohexylmethane, 4,4'-dihydroxydiphenyl, 2,2'-dihydroxydiphenyl, 4,4'-dihydroxydiphenyl sulfone and the hydroxyethyl ethers thereof; phenol-formaldehyde condensation products such as phenol alcohols and phenol-aldehyde resins; S- and N-containing epoxides, for example N,N-diglycidylaniline and N,N'-dimethyldiglycidyl-4,4-diaminodiphenylmethane; and epoxides that have been prepared by customary methods from polyunsaturated carboxylic acids or monounsaturated carboxylic esters of unsaturated alcohols; glycidyl esters, and polyglycidyl esters, which can be obtained by polymerization or copolymerization of glycidyl esters of unsaturated acids or from other acidic compounds, for example from cyanuric acid, diglycidyl sulfide or cyclic trimethylene trisulfone or derivatives thereof.

Examples of very suitable ethers are butane-1,4-diol diglycidyl ether, polyglycerol-3 glycidyl ether, cyclohexanedimethanol diglycidyl ether, glycerol triglycidyl ether, neopentyl glycol diglycidyl ether, pentaerythritol tetraglycidyl ether, hexane-1,6-diol diglycidyl ether, polypropylene glycol diglycidyl ether, trimethylolpropane triglycidyl ether, pentaerythritol tetraglycidyl ether, bisphenol A diglycidyl ether and bisphenol F diglycidyl ether.

Particularly preferred epoxides are cycloaliphatic epoxides such as 3,4-epoxycyclohexylmethyl 3,4-epoxycyclohexanecarboxylate (UVACure1500).

Likewise, preferably, the poly(meth)acrylates are crosslinked by means of a crosslinker-accelerator system ("crosslinking system"), in order to obtain better control over the processing time, crosslinking kinetics and degree of crosslinking. The crosslinker-accelerator system preferably comprises at least one substance containing epoxy groups as crosslinker, and at least one substance having accelerating action at a temperature below the melting temperature of the polymer to be crosslinked for crosslinking reactions by means of compounds containing epoxy groups as accelerator.

Accelerators used are more preferably amines. These should be regarded in a formal sense as substitution products of ammonia; in the formulae that follow, the substituents are represented by "R" and especially include alkyl and/or aryl radicals. Particular preference is given to using those amines that enter into only a low level of reactions, if any, with the polymers to be crosslinked.

In principle, accelerators chosen may be primary (NRH₂), secondary (NR₂H) or else tertiary amines (NR₃), and of course also those having multiple primary and/or secondary and/or tertiary amino groups. Particularly preferred accelerators are tertiary amines such as, for example, triethylamine, triethylenediamine, benzyldimethylamine, dimethylaminomethylphenol, 2,4,6-tris(N,N-dimethylaminomethyl)phenol and N,N'-bis(3-(dimethylamino)propyl)urea. Further preferred accelerators are polyfunctional amines such as diamines, triamines and/or tetramines, for example diethylenetriamine, triethylenetetramine and trimethylhexamethylenediamine.

Further suitable accelerators are pyridine, imidazoles, for example 2-methylimidazole, and 1,8-diazabicyclo[5.4.0]undec-7-ene. It is also possible to use cycloaliphatic polyamines as accelerator. Also suitable are phosphorus-based accelerators such as phosphines and/or phosphonium compounds, for example triphenylphosphine or tetraphenylphosphonium tetraphenylborate.

It is also possible to use quaternary ammonium compounds as accelerators; examples are tetrabutylammonium hydroxide, cetyltrimethylammonium bromide and benzalkonium chloride.

Supplementarily or alternatively, the crosslinking of the poly(meth)acrylates may also take place chemically by radiation, more particularly by UV radiation or electron beams.

### Component (H2) - tackifier resin component

A "tackifier resin" is understood in line with the general understanding of the skilled person to be an oligomeric or polymeric resin which raises the adhesion (the tack, the intrinsic stickiness) of the PSA by comparison with the otherwise identical PSA containing no tackifier resin.

The PSA layer (H) in accordance with the invention comprises a tackifier resin component, which in turn comprises at least one polyterpene resin. The "tackifier resin component" refers to the entirety of all the peel adhesion-boosting resins contained in the PSA composition of the invention. The fraction of the tackifier resin component, based on the total weight of the PSA composition, is preferably 15 to 35 wt%, more preferably 20 to 30 wt% and most preferably 23 to 28 wt%. The tackifier resin component may comprise one single or two or more tackifier resins.

The tackifier resins are preferably selected such that they are miscible (compatible) with those phases in the PSA that are formed by structural elements of the base polymers that are characterized by a glass transition temperature of not more than 0°C, more preferably of not more than -20°C, more particularly of not more than -40°C (according to Test VII). Preferably, the at least one polyterpene resin has a softening temperature of not more than 140°C. Likewise, preferably, the at least one polyterpene resin has a softening temperature of at least 90°C, more preferably of at least 95°C; further preferably of not more than 125°C, more particularly of < 120°C. The softening temperature is determined in accordance with the invention by the "ring-and-ball method" of ASTM E28 that is known to the skilled person. If more tackifier resins are present in the PSA composition, preferably all of the tackifier resins of the tackifier resin component (H2) of the PSA composition, and hence all of the tackifier resins present in the PSA composition, have a softening temperature, determined by the ring-and-ball method according to ASTM E28, of not more than 140°C, more preferably of 90°C to 140°C, more particularly of not more than 125°C, especially preferably of < 120°C.

Preferably, the at least one polyterpene resin is based on α-pinene and/or β-pinene, more preferably on α-pinene. Most preferably, the at least one polyterpene resin is a polymerized α-pinene.

Further preferably, all tackifier resins of the PSA composition are based on α-pinene and/or β-pinene, more preferably on α-pinene. Most preferably, all tackifier resins of the PSA composition are polymerized α-pinenes.

Also preferably, the pressure-sensitive adhesive composition comprises one or more polyterpene resins in a total amount of from 20 to 30 wt%.

In particular, the pressure-sensitive adhesive composition comprises only one tackifier resin which is a polyterpene resin based on α-pinene.

### (H3) optional further components

In one embodiment, the PSA composition further comprises a plasticizer component. The "plasticizer component" refers to the entirety of all the plasticizers present in the PSA composition. Where comprised, the plasticizer component is present in the PSA composition preferably in a fraction of not more than 15 wt%, more preferably of not more than 10 wt%, more particularly of not more than 5 wt%. The plasticizer component may comprise one single or two or more plasticizers. The plasticizer or plasticizers is or are preferably selected from the group consisting of phthalates, hydrocarbon oils, poly(iso)butenes, cyclohexanedicarboxylic esters, plasticizer resins, phosphates or polyphosphates. Preferred among the plasticizer resins are liquid resins, i.e. those having a softening temperature below 30°C, based on hydrocarbon monomers (especially C5 and/or C9) and rosin derivatives.

Also conceivable are (co)polymers, more particularly amorphous (co)polymers having a glass transition temperature of less than 0°C, whose molar mass may amount to between 10 000 and 1 000 000 g/mol.

In order to establish the properties of the PSA composition to a further degree and with greater precision, the PSA composition, beyond the components recited so far, may contain further additives. In one embodiment, the PSA composition comprises 0.1 to 18 wt%, preferably 0.5 to 10 wt%, of additives. The PSA composition may comprise a single additive or two or more additives.

The additives are preferably selected from the group consisting of ageing inhibitors, more particularly primary and secondary ageing inhibitors; light stabilizers; UV protectants; flame retardants; fillers; dyes and pigments. The PSA composition may therefore be coloured as desired or may be white, grey or black.

With particular preference the PSA composition comprises one or more additives selected from the group consisting of
- primary antioxidants, for example sterically hindered phenols, in particular at a fraction of 0.2 to 1 wt%, based on the total weight of the PSA composition;
- secondary antioxidants, for example phosphites and thioethers, in particular at a fraction of 0.2 to 1 wt%, based on the total weight of the PSA composition;
- process stabilizers, for example C radical scavengers, in particular at a fraction of 0.2 to 1 wt%, based on the total weight of the PSA composition,
- light stabilizers, for example UV absorbers and sterically hindered amines, in particular at a fraction of 0.2 to 1 wt%, based on the total weight of the PSA composition;
- processing assistants, in particular at a fraction of 0.2 to 1 wt%, based on the total weight of the PSA composition;
- endblock reinforcer resins in combination with components H1a or H1c, in particular at a fraction of 0.2 to 10 wt%, based on the total weight of the PSA composition; and
- further polymers, especially those of elastomeric nature, for example
   - those based on pure hydrocarbons, more preferably unsaturated polydienes such as natural or synthetically generated polyisoprene and polybutadiene;
   - saturated elastomers, more preferably saturated ethylene-propylene copolymers, α-olefin copolymers, polyisobutylene, butyl rubber and ethylene-propylene rubber; and
   - chemically functionalized hydrocarbons, more preferably halogen-containing, acrylate-containing and allyl or vinyl ether-containing polyolefins, in particular at a fraction of 0.2 to 10 wt%, based on the total weight of the PSA.

### Adhesive tape

A further subject matter of the invention is an adhesive tape for bonding to a surface coating material, comprising
- a carrier layer (T) and
- a layer (H) consisting of a pressure-sensitive adhesive composition according to the invention.

In one embodiment, the carrier layer (T) comprises a film. The film is preferably selected from the group consisting of polyester films, more preferably biaxially oriented polyester films, more particularly films based on polyethylene terephthalate (PET), for example biaxially oriented polyethylene terephthalate; films of monoaxially oriented polypropylene; films of biaxially oriented polypropylene; films of biaxially oriented polyethylene; and films of polyurethane. The carrier layer (T) preferably consists of a film as above.

The film may function as a heat-activatable adhesive layer or heat-activatable sealing layer, thus being such that it softens sufficiently on exposure to heat to enter into a connection, more particularly an adhesive or fusional connection, with a substrate, more particularly a plastics substrate, the connection after cooling being stable and durable.

In a further embodiment, the carrier layer (T) is a foam carrier and hence a foamed layer. The foamed layer preferably consists of a PE foam, a PU foam or a poly(meth)acrylate foam. This foam may have any known form of foam cells - that is, may be either open-celled or closed-celled. The foaming may have been brought about by chemical or physical foaming means, preferably by forceful introduction of gas, more preferably of air ("frothing"), or by introduction of hollow beads, preferably of hollow glass beads, hollow ceramic beads, hollow metal beads and/or expanded, expandable and/or pre-expanded microballoons. Combinations of aforementioned foaming methods are possible in principle. Particularly preferably, the foamed carrier layer (T) comprises 8 - 20 wt%, most preferably 10 - 18 wt% of hollow glass spheres.

With particular preference the carrier layer (T) is a foam carrier comprising at least one poly(meth)acrylate as a matrix polymer. The glass transition temperature of the poly(meth)acrylate is preferably below the usage temperature of the adhesive tape, more preferably below 0°C, more particularly below -20°C. The poly(meth)acrylate therefore preferably has a viscoelastic character. The glass transition temperature here should be understood as a quasi-static glass transition temperature determined via DSC according to Test VII. The poly(meth)acrylate is obtainable preferably by free or controlled radical polymerization of (meth)acrylic acid and one or more (meth)acrylic esters and with particular preference is crosslinked by radiation, most preferably by UV radiation.

With particular preference, therefore, the polymer matrix of the foam carrier is a radiation-crosslinked poly(meth)acrylate. The poly(meth)acrylate may be based preferably on a monomer composition consisting of
(a1) 70 to 100 wt% of acrylic esters and/or methacrylic esters according to the structural formula (I) 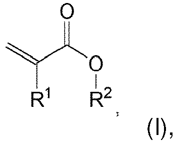 in which R¹ is H or CH₃ and R² is an alkyl chain having 1 to 14 C atoms;
(a2) 1 to 20 wt% of olefinically unsaturated monomers having a functional group which via a crosslinking reagent is able to form a covalent linkage; and
(a3) 0 to 5 wt% further acrylates and/or methacrylates and/or olefinically unsaturated monomers, which are copolymerizable with (a1) and (a2);
with the weight figures being based on the total weight of the monomer composition.

The monomers (a1) are preferably selected from the group consisting of methyl acrylate, methyl methacrylate, ethyl acrylate, ethyl methacrylate, propyl acrylate, propyl methacrylate, n-butyl acrylate, n-butyl methacrylate, n-pentyl acrylate, n-hexyl acrylate, n-hexyl methacrylate, n-heptyl acrylate, n-octyl acrylate, n-nonyl acrylate, lauryl acrylate, stearyl acrylate, stearyl methacrylate, behenyl acrylate; branched isomers of the aforesaid (meth)acrylates), such as 2-ethylhexyl acrylate; cyclohexyl methacrylate, isobornyl acrylate and isobornyl methacrylate.

The monomers (a2) are preferably selected from the group consisting of acrylic acid, methacrylic acid, hydroxyethyl acrylate, 3-hydroxypropyl acrylate, hydroxyethyl methacrylate, 3-hydroxypropyl methacrylate, 4-hydroxybutyl acrylate, 4-hydroxybutyl methacrylate, allyl alcohol, itaconic acid, acrylamide and cyanoethyl methacrylate, cyanoethyl acrylate, 6-hydroxyhexyl methacrylate, N-tert-butylacrylamide, N-methylolmethacrylamide, N-(butoxymethyl)methacrylamide, N-methylolacrylamide, N-(ethoxymethyl)acrylamide, N-isopropylacrylamide, vinyl acetic acid, β-acryloyloxypropionic acid, trichloracrylic acid, fumaric acid, crotonic acid, aconitic acid, dimethylacrylic acid and 4-vinylbenzoic acid.

The monomers (a3) are preferably selected from the group consisting of maleic anhydride, itaconic anhydride, glycidyl methacrylate, benzyl acrylate, benzyl methacrylate, phenyl acrylate, phenyl methacrylate, tert-butylphenyl acrylate, tert-butylphenyl methacrylate, phenoxyethyl acrylate, phenoxyethyl methacrylate, 2-butoxyethyl methacrylate, 2-butoxyethyl acrylate, dimethylaminoethyl methacrylate, dimethylaminoethyl acrylate, diethylaminoethyl methacrylate, diethylaminoethyl acrylate and tetrahydrofurfuryl acrylate, styrene, 4-vinylpyridine, N-vinylphthalimide, methylstyrene and 3,4-dimethoxystyrene.

The general expression "adhesive tape" for the purposes of this invention encompasses all sheetlike structures such as two-dimensionally extended films or film portions, tapes with extended length and limited width, tape portions and the like, and also, lastly, diecuts or labels. An adhesive tape thus has a longitudinal extent and a latitudinal extent. An adhesive tape also has a thickness extending perpendicularly to longitudinal and latitudinal extents, and the longitudinal extent and latitudinal extent may be greater by a multiple than the thickness. The thickness of the adhesive tape of the invention is preferably substantially the same, more particularly the same, over the entire superficial extent of the adhesive tape as defined by length and width.

The adhesive tape of the invention is present in particular in web form. A web refers to an object whose length is greater by a multiple than its width, with the width being approximately the same along the entire length. Adhesive tapes of the invention may be made available in rolled-up form, as a pancake roll in the form of an Archimedean spiral, or in the form of a cross-wound spool for larger running lengths, of the kind often needed in the context of industrial use.

In the structure of the adhesive tape of the invention, a PSA layer may be applied on one or both sides, i.e. may be present on only one side of the carrier layer (T), thus being a PSA layer (H), or on both sides of the carrier layer (T). In the latter case, the PSA layers may be identical or different, and more specifically in each case independent of one another in their chemical identity and in their dimensions.

Where there is a PSA layer (H) on one side only, the adhesive tape, on the side of the carrier layer (T) opposite from the side with the PSA layer (H), may be free of adhesive or else may have a layer of adhesive which does not correspond to a PSA layer (H) and may be pressure-sensitively adhesive or otherwise adhesive - for example, hot melt-adhesive or heat-sealable.

In one specific embodiment, the adhesive tape comprises a PSA layer (H) on one side of the carrier layer (T) and a heat-activatable adhesive layer on the other side of the carrier layer. In a further embodiment, the carrier layer (T) is a heat-activatable adhesive layer, in other words a layer which on exposure to heat softens sufficiently to enter into a bond, more particularly an adhesive or even fusional bond, with a substrate, more particularly a plastics substrate, this bond after cooling being stable and durable. With particular preference in this case the adhesive tape consists of the carrier layer (T), which is a heat-activatable adhesive layer, and of a PSA layer (H).

In a further specific embodiment, the adhesive tape on one side of the carrier layer (T) comprises a PSA layer (H), arranged on the outside, and on the other side of the carrier layer comprises a further PSA, which is not a PSA layer (H) and comprises at least one hydrogenated polyvinylaromatic-polydiene block copolymer. The hydrogenated polyvinylaromatic-polydiene block copolymer is preferably a styrene-ethylene-butylene-styrene block copolymer (SEBS) or a styrene-ethylene-propylene-styrene block copolymer (SEPS). The adhesive tape in this case therefore has an asymmetrical structure.

The PSA layer (H) may be applied to the carrier layer (T) by fundamentally known processes, as for example by means of knife processes, nozzle knife processes, rolling-rod nozzle processes, extrusion die processes, casting die processes or caster processes. Likewise applicable are roll application processes, printing processes, screen-printing processes, halftone roll processes, inkjet processes and spraying processes. The PSA layer (H) is applied to the carrier layer (T) preferably from the melt by means of extrusion and/or die.

The application processes involved, however, need not necessarily entail direct coating. The PSA layer (H) may also first be coated in some other way and applied to the carrier layer (T) in a second step. Where appropriate, further layers or plies of material may be subsequently used for coating or laminated on in-line or off-line, and so multi-layers or multi-ply adhesive tape constructions may also be produced. In particular it is possible for there to be further layers present between the PSA layer (H) and the carrier layer (T). Such further layers may introduce specific additional properties into the adhesive tape, such as mechanical properties, for example. They may also promote the anchorage between PSA layer and carrier layer or reduce or suppress the migration of individual constituents from one layer into the other.

The thickness of the PSA layer (H) is preferably 15 to 100 µm, more preferably 25 to 80 µm, more particularly 30 to 70 µm.

The total thickness of an adhesive tape of the invention is preferably 25 µm to 5 mm, more preferably 50 µm to 2 mm, more particularly 100 to 1500 µm.

The adhesive tape of the invention may comprise a barrier layer (B) between the carrier layer (T) and the PSA layer (H). The barrier layer (B) serves in particular for reducing or suppressing the migration of individual constituents of one layer into its counterpart layer; it may therefore also be addressed as a blocking layer. The barrier layer (B) preferably comprises at least one polyamide, more particularly one polyamide. For example, the barrier layer (B) may be a layer as described in DE 196 28 177 A1 or in US 2002/132925 A1.

The adhesive tape of the invention may comprise a primer layer (P) between the carrier layer (T) and the PSA layer (H), this layer (P) thus serving to boost the anchorage of the PSA layer on the carrier layer. More particularly the primer layer (P) may be a layer as described in DE 196 28 177 A1.

### Properties and use of the adhesive tape

Adhesive tapes of the invention have proved to be advantageous particularly for the production of bonds on clearcoats, especially on clearcoats which have not been pre-cleaned using solvent. A further subject of the present invention, therefore, is the use of an adhesive tape of the invention for producing a bond on a clearcoat material, preferably on an automotive clearcoat. More greatly preferred is the use of an adhesive tape of the invention for producing a bond, more particularly a permanent bond, between an ancillary component having a surface comprising or consisting of ethylene (co)polymer, propylene (co)polymer, EPR, EPM and/or EPDM and a surface of a vehicle furnished with a clearcoat. In this case or other cases it may be advantageous if the adhesive tape on the side of the ancillary component has a layer of an adhesive, more particularly a pressure-sensitive adhesive, which is not a PSA layer (H). Preference is likewise given to using an adhesive tape of the invention for producing a bond, more particularly a permanent bond, of plastics or metals to substrates which have a clearcoat on their surface to be bonded.

A further subject of the invention is a composite article comprising a substrate provided with a clearcoat surface, more particularly a vehicle body provided with a clearcoat surface, an adhesive tape of the invention, wherein the layer (H) is directly in contact with the clearcoat surface of the substrate, and a further substrate. Therein, the carrier layer (T) of the adhesive tape of the invention is preferably a foamed layer, more particularly a foamed layer with a poly(meth)acrylate as matrix polymer.

Adhesive tapes of the invention are notable for a series of physical properties which render them exceptionally suitable for bonds on clearcoats, but also on other surfaces such as plastics, glass, ceramic, wood and/or steel. It has been found that these advantageous properties are retained even at high temperatures.

An adhesive tape of the invention preferably has, on the side of the PSA layer (H), a retention of peel adhesion on bonding to clearcoat of more than 75%, more preferably of more than 85% and more particularly of more than 95%, in each case determined according to Test method Vc as described herein.

### Examples:

### I. Chemicals used

**Table 1: Chemicals used in the examples**

| **Component** | **Chemical** | **Description** | **Manufacturer** |
|---|---|---|---|
| Base polymer | | | |
| | Polyacrylate | Polyacrylate | |
| | Kraton^{®} D1118 | SBS rubber | Kraton Polymers |
| Tackifier resin | | | |
| | Dertophene^{®} T115 | Terpene phenolic resin, softening temperature 120°C, OH number 45 - 65 mg KOH / g | DRT |
| | Dercolyte^{®} A115 | Polyterpene resin softening temperature 115°C | DRT |
| | Regalrez^{®} 6108 | Hydrocarbon resin, softening temperature 108°C | Synthomer |
| Crosslinker | | | |
| | Uvacure^{®} 1500 | Cycloaliphatic di-epoxide resin | Special Chem |

### II. Test methods

All of the measurements were carried out, unless otherwise indicated, at 23°C and 50% relative humidity.

### Test I - Molar mass (GPC)

### (a) Peak molar masses

GPC is appropriate as a metrological method for determining the molar mass of individual polymer modes in mixtures of different polymers. For the polydiene block copolymers which can be used in the invention, for example, the molar mass distributions are typically narrow enough to allow polymer modes which can be assigned to triblock copolymers, diblock copolymers or multiblock copolymers to appear with sufficient resolution from one another in the elugram. It is then possible to read off the peak molar mass for the individual polymer modes from the elugrams.

Peak molar masses (Peak MW) are determined by gel permeation chromatography (GPC). The eluent used is THF. The measurement is made at 23°C. The pre-column used is PSS-SDV, 5 µ, 10³ Å, ID 8.0 mm x 50 mm. For separation, the columns used are PSS-SDV, 5 µ, 10³ Å and also 10⁴ Å and 10⁶ Å each with ID 8.0 mm x 300 mm. The sample concentration is 4 g/l, the flow rate 1.0 ml per minute. Calibration is carried out using the commercially available ReadyCal kit Poly(styrene) high from PSS Polymer Standard Service GmbH, Mainz.

### (b) Weight-average molar masses

The weight-average molecular weight M_{w} is also determined by gel permeation chromatography (GPC). The eluent used is THF. The measurement is made at 23°C. The pre-column used is PSS-SDV, 5 µ, 10³ Å, ID 8.0 mm x 50 mm. For separation, the columns used are PSS-SDV, 5 µ, 10³ Å and also 10⁴ Å and 10⁶ Å each with ID 8.0 mm x 300 mm. The sample concentration is 4 g/l, the flow rate 1.0 ml per minute. Calibration is carried out using the commercially available ReadyCal kit Poly(styrene) high from PSS Polymer Standard Service GmbH, Mainz.

### Test II - (Tackifier) resin softening temperature

For individual substances: the (tackifier) resin softening temperature (softening point; soft. point) is performed according to the relevant methodology, which is known as ring & ball and is standardized according to ASTM E28.

### Test III - Diacetone alcohol cloud point (DACP)

5.0 g of test substance (the tackifier resin specimen under investigation) are weighed out into a dry test tube, and 5.0 g of xylene (isomer mixture, CAS [1330-20-7], ≥ 98.5%, Sigma-Aldrich #320579 or comparable) are added. The test substance is dissolved at 130°C and the solution is then cooled to 80°C. Any xylene that has escaped is made up for with further xylene, so that 5.0 g of xylene are again present. Then 5.0 g of diacetone alcohol (4-hydroxy-4-methyl-2-pentanone, CAS [123-42-2], 99%, Aldrich #H41544 or comparable) are added. The test tube is shaken until the test substance has dissolved completely. For this purpose the solution is heated to 100°C. The test tube containing the resin solution is then introduced into a Novomatics Chemotronic Cool cloud point measuring instrument and heated therein to 110°C. Cooling is carried out at a cooling rate of 1.0 K/min. The cloud point is detected optically. For this purpose, the temperature at which the turbidity of the solution is 70% is registered. The result is reported in °C. The lower the DACP, the higher the polarity of the test substance.

### Test IV - Mixed methylcyclohexane aniline point (MMAP)

5.0 g of test substance (the tackifier resin specimen under investigation) are weighed out into a dry test tube, and 10 ml of dry aniline (CAS [62-53-3], ≥ 99.5%, Sigma-Aldrich #51788 or comparable) and 5 ml of dry methylcyclohexane (CAS [108-87-2], ≥ 99%, Sigma-Aldrich #300306 or comparable) are added. The test tube is shaken until the test substance has dissolved completely. For this purpose the solution is heated to 100°C. The test tube containing the resin solution is then introduced into a Novomatics Chemotronic Cool cloud point measuring instrument and heated therein to 110°C. Cooling is carried out at a cooling rate of 1.0 K/min. The cloud point is detected optically. For this purpose, the temperature at which the turbidity of the solution is 70% is registered. The result is reported in °C. The lower the MMAP, the higher the aromaticity of the test substance.

### Test V - Peel Adhesion

For the determination of peel adhesion, the clear coat (2K Progloss^{®} FF99-0535, BASF SE; CeramiClear^{®} 7.0 Clearcoat, PPG Industries) panels to be bonded were cut into strips of 20 mm * 250 mm. The panel surfaces were cleaned with isopropanol and hand tissue, respectively. After waiting for 15 min to evaporate the solvent, the adhesive tape with a dimension of 10 mm * 200 mm was fixed to the substrate by rolling a 4 kg roller back and forth for two seconds each way. After 20 min dwell time at room temperature, specimens were peeled off from the substrate with a Zwick machine (Zwick Roell Z2.5) at an angel of 90 ° and at a speed of 300 mm/min. The results were determined as a medium of 3 specimens.

### Test VI - Static shear resistance (SSR, Holding power)

Clear coat panels (2K Progloss^{®} FF99-0535, BASF SE) having a dimension of 30 mm * 50 mm were cleaned with isopropanol. After waiting for 15 min to evaporate the solvent, the adhesive tapes having a dimension of 10 mm * 25 mm were fixed to the panels by pressing a weight of 2 kg for 1 minute. After a dwell time of 24 hours, the samples were loaded with a weight of 250 g and hung in an oven at 95 °C. The time until the weight fell down was measured, a minimum holding time of 6000 minutes is considered as sufficient.

### Test VII - Glass transition temperature

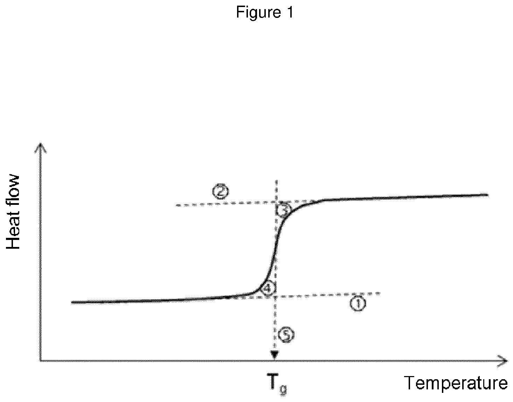

The glass transition temperature is determined by means of dynamic scanning calorimetry (DSC). For this test, about 5 mg of the untreated samples are weighed out into an aluminium crucible (volume 25 µl) and closed with a perforated lid. For the measurement, a DSC 204 F1 from Netzsch is used and is operated under nitrogen for inertization. The sample is first cooled to -150°C, heated to +150°C at a heating rate of 10 K/min, and cooled again to -150°C. The subsequent second heating curve is run again at 10 K/min, and the change in the heat capacity is recorded. Glass transitions are recognized as steps in the thermogram. The glass transition temperature is evaluated as follows (in this regard, see Figure 1).

A tangent is applied in each case to the baseline of the thermogram before 1 and after 2 of the step. In the region of the step, a line 3 of best fit is placed parallel to the ordinate in such a way that the two tangents intersect, specifically such as to form two areas 4 and 5 (between the respective tangent, the line of best fit, and the measurement plot) of equal content. The point of intersection of the lines of best fit positioned accordingly and the measurement plot gives the glass transition temperature.

### Test VIII - Vinyl fraction

The fraction of 1,2- and 3,4-linked conjugated diene in the B block of vinylaromatic block copolymer (called in total vinyl fraction) can be determined via ¹H NMR. The spectroscopic analysis uses the following instrument: ¹H NMR: Bruker AMX 500 (500.14 MHz). The standard used was the solvent signal δ (CHCl₃) = 7.24 ppm. The chemical shifts are always stated in ppm. The coupling constants J are stated in hertz [Hz]. The signal patterns are stated as follows: s (singlet), bs (broad singlet), d (doublet), dd (doublet of a doublet), t (triplet), q (quintet), m (multiplet).

### Test IX - Fraction of aromatic blocks

The fraction of aromatic blocks in hydrogenated polyaromatic-polydiene block copolymers is performed using ¹³C NMR. This is elucidated below using, as an example, a hydrogenated polystyrene-polydiene block copolymer (SEBS).

From the ¹³C spectrum, the mean value is formed from two integrals, namely that corresponding to the styrene-C signal at around 144-146 ppm and that corresponding to the styrene-CH at around 125-127 ppm. This mean value, for SEBS, is expressed relative to the butylene integral (hydrogenated 1,2-BD), namely the CH₃ signal at around 10 ppm, and to the ethylene integral (1,4-BD), which may be obtained by calculation from the total-olefinic integral at around 20-50 ppm. The resulting fractions in mol% are then converted to wt%.

### III. Experiments

A series of adhesive tapes were produced and used to generate test adhesive tape specimens. The properties listed in the tables were then tested. The following applies:
"E": Experiments in accordance with the invention
"C": Comparative experiments, not in accordance with the invention.

### Production of the PSA compositions

### Polyacrylate

A conventional 2 L glass reactor suitable for radical polymerizations with evaporative cooling was charged with 300 g of a monomer mixture, containing 87 g of butyl acrylate, 177 g of ethylhexyl acrylate and 36 g of acrylic acid, and 200 g of acetone:special-boiling-point spirit 60/95 (1:1). After nitrogen gas had been passed through the reactor for 45 minutes, with stirring, the reactor was heated to 58°C and 0.15 g of 2,2'-azodi(2-methylbutyronitrile) (Vazo 67^{®}, from DuPont), in solution of 6 g of acetone, was added. The external heating bath was then heated to 75°C and the reaction was carried out constantly at this external temperature. After a reaction time of 1 h a further 0.15 g of VAZO 67^{®}, in solution in 6 g of acetone, was added. After 3 hours the batch was diluted with 90 g of special-boiling-point spirit 60/95. After a reaction time of 5:30 hours, 0.45 g of bis-(4-tert-butylcyclohexanyl) peroxydicarbonate (Perkadox 16^{®}, from Akzo Nobel), in solution in 9 g of acetone, was added. After a reaction time of 7 hours, a further 0.45 g of bis-(4-tert-butylcyclohexanyl) peroxydicarbonate (Perkadox 16^{®}, from Akzo Nobel), in solution in 9 g of acetone, was added. After a reaction time of 10 hours, the batch was diluted with 90 g of special-boiling-point spirit 60/95. After a reaction time of 24 h, the reaction was discontinued and the batch was cooled to room temperature.

### Pressure-sensitive adhesive composition

A stock solution of the polydiene block copolymer (see table 2) was prepared. The solids content was 35 wt% and the solvent mixture used was special-boiling-point spirit 60/95:acetone 70:30 (special-boiling-point spirit 60/95 referred to below simply as "spirit"). The desired fraction of stock solution was added to the polyacrylate solution obtained as set forth hereinbefore. The solution thus obtained was admixed with the desired amount of resin, diluted with a spirit:acetone 70:30 solvent mixture to produce a final solids content of 35 wt%, and dissolved on a roller bed for 12 h. Lastly, the crosslinker solution (3 wt% in acetone) was added and the solvent-containing mixture was coated out with a coating bar onto a silicone release film in a thickness of 50 µm (dry). The solvent was then evaporated off at 100°C for 15 min to dry and crosslink the layer of adhesive.

### Adhesive tapes

The PSA compositions were N₂-Corona treated and laminated onto a 1000 µm thick, UV-cured polyacrylate (91 wt% 2-EHA, 9 wt% acrylic acid) foam containing 14 wt% hollow glass spheres. On its other side, the foam layer was equipped with a 50 µm SEBS-based adhesive. The 3-layered assemblies were stored for three days in standard climate (23 °C, 50 % relative humidity) prior to being tested.

Compositions of the PSA layers and results are given in tables 2-4.

**Table 2: Examples - Compositions of the PSA layers and test results**

| Results achieved on 2K Progloss^{®} FF99-0535 | | | | | | | |
|---|---|---|---|---|---|---|---|
| | | C1 | C2 | C3 | C4 | C5 | C6 |
| Polymers (pbw) | Polyacrylate | 90 | 80 | 70 | 60 | 50 | 45 |
| | Kraton^{®} D1118 | 5 | 10 | 15 | 20 | 50 | 27.5 |
| Resin (pbw) | Dertophene^{®} T115 | | | | | | |
| | Dercolyte^{®} A115 | 5 | 10 | 15 | 20 | | 27.5 |
| | Regalrez^{®} 6108 | | | | | | |
| Crosslinker (pbw) | Uvacure^{®} 1500 | 0.2 | 0.2 | 0.2 | 0.2 | 0.2 | 0.2 |
| | | | | | | | |
| Peel adhesion (N/cm) | cleaning with isopropanol | 26.3 | 21.7 | 28.7 | 41.0 | 37.7 | 40.0 |
| | Cleaning with hand tissue | 24.0 | 18.0 | 22.3 | 29.0 | 28.7 | 37.7 |
| Retention of peel adhesion (dry/solvent; %) | | 91 | 83 | 78 | 71 | 76 | 94 |
| | | | | | | | |
| SSR (min) | | 10.000 | 10.000 | 10.000 | 10.000 | 10.000 | 37 |

**Table 3: Examples - Compositions of the PSA layers and test results**

| Results achieved on 2K Progloss^{®} FF99-0535 | | | | | |
|---|---|---|---|---|---|
| | | C7 | C8 | C9 | C10 |
| Polymers (pbw) | Polyacrylate | 45 | 42.5 | 50 | 50 |
| | Kraton^{®} D1118 | 30 | 30 | 25 | 25 |
| Resin (pbw) | Dertophene^{®} T115 | | | 25 | |
| | Dercolyte^{®} A115 | 25 | 27.5 | | |
| | Regalrez^{®} 6108 | | | | 25 |
| Crosslinker (pbw) | Uvacure^{®} 1500 | 0.2 | 0.2 | 0.2 | 0.2 |
| | | | | | |
| Peel adhesion (N/cm) | cleaning with isopropanol | 41.0 | 39.5 | 39.0 | 42.5 |
| | cleaning with hand tissue | 33.3 | 11.3 | 26.0 | 41.5 |
| Retention of peel adhesion (dry/solvent; %) | | 81 | 29 | 67 | 98 |
| | | | | | |
| SSR (min) | | 271 | 155 | 8.000 | 126 |

**Table 4: Examples - Compositions of the PSA layers and test results**

| Results achieved on 2K Progloss^{®} FF99-0535 | | | | |
|---|---|---|---|---|
| | | E1 | E2 | E3 |
| Polymers (pbw) | Polyacrylate | 50 | 48 | 50 |
| | Kraton^{®} D1118 | 22.5 | 24 | 26 |
| Resin (pbw) | Dertophene^{®} T115 | | | |
| | Dercolyte^{®} A115 | 27.5 | 28 | 24 |
| | Regalrez^{®} 6108 | | | |
| Crosslinker (pbw) | Uvacure^{®} 1500 | 0.2 | 0.2 | 0.2 |
| | | | | |
| Peel adhesion (N/cm) | cleaning with isopropanol | 42.5 | 41.0 | 43.0 |
| | Cleaning with hand tissue | 41.0 | 42.0 | 41.0 |
| Retention of peel adhesion (dry/solvent; %) | | 97 | 100 | 95 |
| | | | | |
| SSR (min) | | 10.000 | 10.000 | 10.000 |

**Table 5: Examples - Compositions of the PSA layers and test results**

| Results achieved on CeramiClear^{®} 7.0 Clearcoat | | | | |
|---|---|---|---|---|
| | | C11 | C12 | E4 |
| Polymers (pbw) | Polyacrylate | 60 | 70 | 50 |
| | Kraton^{®} D1118 | 20 | 15 | 40 |
| Resin (pbw) | Dertophene^{®} T115 | | | |
| | Dercolyte^{®} A115 | 20 | 15 | 10 |
| Crosslinker (pbw) | Uvacure^{®} 1500 | 0.2 | 0.2 | 0.2 |
| | | | | |
| Peel adhesion (N/cm) | cleaning with isopropanol | 13.3 | 13.3 | 24.1 |
| | Cleaning with hand tissue | 11.7 | 15.7 | 18.3 |
| Retention of peel adhesion (dry/solvent; %) | | 88 | 100 | 76 |
| | | | | |
| SSR (min) | | 10.000 | 10.000 | 10.000 |

## Claims

1. Pressure-sensitive adhesive composition comprising
- (H1) a blend of one or more poly(meth)acrylate(s) and one or more polydiene block copolymer(s); and
- (H2) a tackifier resin component comprising at least one polyterpene resin;
**characterized in that** the pressure-sensitive adhesive composition comprises the one or more poly(meth)acrylate(s) in a total amount of more than 45 wt% and less than 60 wt%, based on the total weight of the pressure-sensitive adhesive composition.

2. Pressure-sensitive adhesive composition according to Claim 1, **characterized in that** the pressure-sensitive adhesive composition comprises the one or more polydiene block copolymers in a total amount of more than 20 wt%.

3. Pressure-sensitive adhesive composition according to claim 2, **characterized in that** the pressure-sensitive adhesive composition comprises the one or more polydiene block copolymers in a total amount of less than 30 wt%.

4. Pressure-sensitive adhesive composition according to either of the preceding claims, **characterized in that** the one or more polydiene block copolymers are present in a structure of the form A-B-A, (A-B)ₙ, (A-B)ₙX or (A-B-A)ₙX, in which
- the blocks A independently of one another are a polymer formed by polymerization of at least one vinylaromatic;
- the blocks B independently of one another are polybutadiene blocks;
- X is the radical of a coupling reagent or polyfunctional initiator; and
- n is an integer ≥ 2.

5. Pressure-sensitive adhesive composition according to either of the preceding claims, **characterized in that** the polyterpene resin has a softening temperature as determined by the ring-and-ball method according to ASTM E28, of not more than 140 °C.

6. Pressure-sensitive adhesive composition according to either of the preceding claims, **characterized in that** the polyterpene resin has a softening temperature as determined by the ring-and-ball method according to ASTM E28, of at least 90 °C.

7. Pressure-sensitive adhesive composition according to either of the preceding claims, **characterized in that** the pressure-sensitive adhesive composition comprises one or more polyterpene resins in a total amount of from 20 to 30 wt%.

8. Adhesive tape for bonding to a surface coating material, comprising
- a carrier layer (T) and
- a layer (H) consisting of a pressure-sensitive adhesive composition according to either of the preceding claims.

9. Adhesive tape according to claim 8, **characterized in that** the carrier layer (T) is a foam carrier comprising at least one poly(meth)acrylate as a matrix polymer.

10. Use of an adhesive tape according to claim 8 or 9 for producing a bond on a clearcoat material.

11. Composite article comprising a substrate provided with a clearcoat surface, an adhesive tape according to claim 8 or 9, wherein the layer (H) is directly in contact with the clearcoat surface of the substrate, and a further substrate.
